# EUROPÄISCHE PATENTSCHRIFT

(11) **EP 2 913 316 B1**
(45) Veröffentlichungstag und Bekanntmachung des Hinweises auf die Patenterteilung: **24.02.2016**
(21) Anmeldenummer: 14156790.9
(22) Anmeldetag: 26.02.2014
(51) Int. Cl.: C04B 28/06, C04B 28/14, C04B 7/32, C04B 111/00, C04B 111/60

(54) **Ternäres Bindemittelsystem auf Basis von Calciumaluminaten**
Ternary binding agent system based on calcium aluminates
Système de liant ternaire à base des aluminates de calcium

(43) Veröffentlichungstag der Anmeldung: 02.09.2015
(73) Patentinhaber: Uzin Utz AG, 89079 Ulm (DE)
(72) Erfinder: LISAC, Peter, 89079 Ulm (DE); SAGMEISTER, Christian, 89079 Ulm (DE); GRETZ, Markus, 89079 Ulm (DE); TSALOS, Johannis, 89079 Ulm (DE)
(74) Vertreter: Isarpatent

(56) Entgegenhaltungen:
- EP-A1- 0 213 390
- DE-A1- 2 428 711
- DE-A1- 3 000 071
- DE-T2- 60 304 041
- PELLETIER L ET AL: "The ternary system Portland cement-calcium sulphoaluminate clinker-anhydrite: Hydration mechanism and mortar properties", CEMENT AND CONCRETE COMPOSITES, ELSEVIER APPLIED SCIENCE, BARKING, GB, Bd. 32, Nr. 7, 1. August 2010 (2010-08-01) , Seiten 497-507, XP027063481, ISSN: 0958-9465, DOI: 10.1016/J.CEMCONCOMP.2010.03.010 [gefunden am 2010-05-28]

## Beschreibung

Die vorliegende Erfindung betrifft ein mineralisches Bindemittelsystem, umfassend ein mineralisches Bindemittel B1 von Calciumaluminaten, welches ein Verhältnis C/A von Calciumoxid C zu Aluminiumoxid A von 0,7 bis 1,1 hat, ein mineralisches Bindemittel B₂ von Calciumaluminaten, welches ein Verhältnis C/A von Calciumoxid C zu Aluminiumoxid A von 1,2 bis 2,7 hat, und mindestens einen Sulfatträger, einen Trockenmörtel, welcher dieses mineralische Bindemittelsystem umfasst, einen angemischten Trockenmörtel auf Basis dieses Trockenmörtels sowie die Verwendung des Trockenmörtels als Fliesenklebemörtel, Spachtelmasse, Dichtschlämme, Fugenmörtel, Estrichbindemittel, Estrichmörtel, Reparaturklebstoff und/oder Verbundabdichtung.

### Stand der Technik

Für verschiedene Anwendungen im Bereich der Herstellung und Verwendung von Zement werden verschiedene Mörtelsysteme bereitgestellt, wobei beispielsweise zwischen zweikomponentigen und einkomponentigen Trockenmörtelsystemen unterschieden werden kann. Bei der Verwendung von zweikomponentigen (2-K) Trockenmörtelsystemen besteht die Gefahr von Mischungsfehlern, da die beiden Komponenten des Trockenmörtelsystems speziell für spezifische Mischverhältnisse eingestellt werden. Für spezielle Anwendungen (z.B. zementäre Abdichtungen im Verbund) werden unter anderem zementäre einkomponentige (1-K) Trockenmörtelsysteme mit einem hohen Anteil an Polymeren (> 20, teilweise bis zu 40 Gew.-%) eingesetzt. Solche einkomponentigen Trockenmörtelsysteme sind werkseitig formulierte Pulverprodukte, die vor der Applikation mit Wasser angemischt werden und dadurch eine verarbeitbare Konsistenz erhalten.

Bei den eingesetzten Polymeren handelt es sich v.a. um redispergierbare Dispersionspulver, Polymerfasern, Methylcellulosen, Stärkeether, Dispergiermittel und/oder verdickend wirkende Polymere. Der hohe Anteil an Polymeren resultiert beispielsweise aus den speziellen technischen Anforderungen an solche einkomponentigen Abdichtungssysteme, wie für flüssig zu verarbeitende wasserundurchlässige Produkte im Verbund mit Fliesen- und Plattenbelägen (z.B. DIN EN 14891) gefordert werden.

Es ist hierbei bekannt, dass ein hoher Polymergehalt in zementären Mörtelsystemen zu Störungen des Hydratationsverlaufs (Erhärtung) bzw. der Abbindekinetik führt. Durch die Zusammensetzung der Polymere (spez. Monomere) und deren Additivierung kommt es im Allgemeinen zu einer signifikanten Beeinflussung der Reaktivität der zementären Bindemittelkomponenten. Während der Erhärtung zementärer Bindemittelsysteme kommt es generell durch Lösungs- und Rekristallisationsprozesse zur Bildung von sog. Hydratphasen. In den gebildeten Hydratphasen ist Wasser chemisch gebunden. Das Gefüge der kristallinen Hydratationsprodukte ist für die Festigkeit und Festigkeitsentwicklung zementärer Bindemittelsysteme verantwortlich.

Darüber hinaus ist es für die Verarbeitungseigenschaften beispielsweise solcher einkomponentigen Dichtschlämme wichtig, eine entsprechende Verarbeitungszeit zu ermöglichen. Als Verarbeitungszeit ist hierbei der Zeitraum von in-Kontakt-Bringen des Trockenmörtels mit Wasser bis zu dem Zeitpunkt, an dem er nicht mehr sicher zu verarbeiten ist, d.h. bis dieser seine verarbeitbare Konsistenz durch die einsetzende Reaktion verliert, zu verstehen. Am Ende der Verarbeitungszeit beginnt die Gefügeausbildung durch die sich bildenden Hydratationsprodukte, und das Produkt lässt sich nicht mehr sicher verarbeiten.

Eine entsprechende Verarbeitungszeit kann generell mit verschiedenen chemischen Zusätzen (u.a. Fruchtsäuren, Phosphaten, etc.) eingestellt werden. Diese können sich aber ebenfalls nachteilig auf die Abbindereaktion und den folgenden Hydratationsverlauf auswirken. Der verzögernde Effekt solcher Zusätze beruht beispielsweise auf der Komplexierung von bestimmten Reaktionspartnern (v.a. mehrwertige Ionen), die dann zur Ausbildung von Hydratationsprodukten während der Erhärtung nicht mehr zur Verfügung stehen.

Es sind beispielsweise zementäre 1-K Mörtelformulierungen bekannt (u.a. Verbundabdichtungen), welche einen Polymeranteil > 20 Gew.-% aufweisen. Dabei handelt es sich zum einen um rein Portlandzement-basierte Systeme (OPC-Systeme) mit einem Polymeranteil bis ca. 30 Gew.-%. Solche Systeme weisen zwar sehr lange Verarbeitungszeiten, (> 4 Stunden) jedoch bei gleichzeitig sehr langsamer, nicht praxisgerechter Durchhärtung (> 4 Stunden) auf. Zum anderen sind Produkte bekannt, welche auf ternären Bindemittelsystemen bestehend aus Portlandzement (OPC; Hauptbindemittel), Tonerdeschmelzzement (TEZ) und einem Sulfatträger basieren. Auch diese Systeme weisen einen Polymeranteil > 20 Gew.-% und bis zu 40 Gew.-% auf. Bei derartigen Systemen ist oft die bei ausreichend kurzer Durchhärtungszeit nicht praxisgerecht kurze Verarbeitungszeit (ca. 30 Minuten) nachteilig.

Daneben ist ein neuartiger Tonerdeschmelzzement (Ettringit-Bildner) für binäre Bindemittelsysteme (TEZ + Sulfatträger) bekannt mit dem besonderen Vorteil, dass der Einsatz von Portlandzement in der Formulierung überflüssig wird, wobei die besondere Reaktivität eines solchen Bindemittelsystems in FR2839066 (Seite 10/11) bzw. DE60304041 (Seite 7/8) beschrieben wird.

Darüber hinaus sind Richtformulierungen von Rohstoffherstellern für zementäre 1-K Mörtelsysteme mit dem Schwerpunkt auf Abdichtungen im Verbund bekannt.

Beispielsweise wird bei einer Richtformulierung der BASF (25.07.2011) ein ternäres Bindemittelsystem auf Basis OPC (Hauptbestandteil), TEZ und Sulfatträger beschrieben. Der Polymeranteil beträgt hier ca. 33 Gew.-%. Beim eingesetzten Dispersionspulver handelt es sich um ein Pulver auf Basis eines Copolymeren eines Acrylsäureesters und Styrol. Nachteilig bei dieser Richtformulierung sind jedoch die späte Begehbarkeit und die lange Zeitdauer bis zum Auftragen einer zweiten Schicht, speziell bei niedrigen Temperaturen und hoher Luftfeuchtigkeit sowie eine zu kurze Verarbeitungszeit bei hohen Temperaturen.

DE60304041T2 zeigt ein hydraulisches Bindemittel und einen daraus hergestellten Trockenmörtel enthaltend Calciumaluminat mit einem C/A-Verhältnis von 1,2 bis 2,7 und einen Sulfatträger in Form von Calciumsulfat.

DE3000071A1 zeigt einen Doppelklinker für Feuerfestzement enthaltend einen Kalziumsulphoaluminat-Klinker mit einem C/A-Verhältnis von 0.7-1.1 und einen Tonerdezementklinker mit einem C/A-Verhältnis von 0.41.

EP0213390A1 zeigt einen schnellerhärtenden Zement mit schneller Begeh- und Belastbarkeit auf Basis eines ettringitbildenden Bindemittelsystems enthaltend Aluminate, Calciumsulfate und Calciumhydroxid.

DE2428711A1 zeigt einen schnellerhärtenden Zement mit regulierbarer Abbindezeit enthaltend Calciumaluminat und Calciumsulfat.

Pelletier L. et al in "The ternary system Portland cement-calcium sulphoaluminateanhydrite: Hydration mechanism and mortar properties" offenbart ein ternäres Bindemittelsystem auf Basis von Portlandzement, Tonerdezement und Calciumsulfat.

Es besteht ein Bedarf an verbesserten Bindemittelsystemen bzw. Trockenmörteln mit verbessertem Abbindeverhalten.

### Kurze Beschreibung der Erfindung

Es wurde herausgefunden, dass mit einem bevorzugt portlandzementfreien, ternären Bindemittelsystem, umfassend zwei verschiedene Tonerdeschmelzzemente sowie einen Sulfatträger, in zementären 1-K Mörtelformulierungen mit hohem Polymergehalt eine Hydratationsreaktion erzielt werden kann, so dass die Erhärtung nicht überwiegend durch physikalische Trocknung sondern durch eine chemische Reaktion erfolgt. Außerdem ist es möglich, die Verarbeitungszeit nahezu unabhängig von der Erhärtungszeit zu kontrollieren und praxisgerecht einzustellen.

Gemäß einem Aspekt betrifft die vorliegende Erfindung ein mineralisches Bindemittelsystem bzw. eine mineralische Kombination von Bindemitteln, umfassend
i) ein mineralisches Bindemittel B1 von Calciumaluminaten, welches ein Verhältnis C/A von Calciumoxid C zu Aluminiumoxid A von 0,7 bis 1,1 hat;
ii) ein mineralisches Bindemittel B2 von Calciumaluminaten, welches ein Verhältnis C/A von Calciumoxid C zu Aluminiumoxid A von 1,2 bis 2,7 hat; und
iii) mindestens einen Sulfatträger.

Gemäß einem weiteren Aspekt betrifft die vorliegende Erfindung darüber hinaus einen Trockenmörtel, umfassend ein erfindungsgemäßes mineralisches Bindemittelsystem, Polymere, und gegebenenfalls Füllstoffe und/oder Rheologieadditive.

Zudem betrifft die vorliegende Erfindung einen angemischten Trockenmörtel, umfassend den erfindungsgemäßen Trockenmörtel, Wasser und gegebenenfalls Sand, sowie die Verwendung des erfindungsgemäßen Trockenmörtels als, bevorzugt einkomponentige(n), Fliesenklebemörtel, Spachtelmasse, Dichtschlämme, Fugenmörtel, Estrichbindemittel, Estrichmörtel, Reparaturklebstoff und/oder Verbundabdichtung.

Überraschend wurde festgestellt, dass durch die neuartige Bindemittelkombination in Verbindung mit einem Polymeranteil > 20 bzw. bis zu 35-50 Gew.-% eine ausreichend schnelle Hydratationsreaktion erreicht werden kann, so dass die Wartezeiten bis zur Begehbarkeit (z.B. 2 Stunden) und Überarbeitung (z.B. 2,5 Stunden) gegenüber Vergleichssystemen deutlich verkürzt

werden können. Die vorgeschlagene Bindemittelformulierung ermöglicht darüber hinaus die Einstellung einer ausreichend langen Verarbeitungszeit (z.B. 50 Minuten). Auch die Reaktivität unter ungünstigen klimatischen Umgebungsbedingungen (tiefe Temperatur, z.B. ≤ 10°C, hohe Luftfeuchtigkeit, z.B. ≥ 80%) wird verbessert. Gegenüber Vergleichssystemen werden die Begehbarkeit (z.B. nach 2 h bei 23°C und 50% relativer Luftfeuchte) und die Überarbeitbarkeit früher erreicht (z.B. 2,5 h bei 23°C und 50% relativer Luftfeuchte). Die Hydratationsreaktion zementärer Mörtelformulierungen ist hierbei stark von den klimatischen Umgebungsbedingungen abhängig, und tiefe Temperaturen und hohe Luftfeuchten führen beispielsweise generell zu einer Verlangsamung des Abbindeprozesses.

Weitere Aspekte der vorliegenden Erfindung sind den abhängigen Ansprüchen und der detaillierten Beschreibung zu entnehmen.

### Beschreibung der Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.
Figur 1 zeigt die Ergebnisse von Ultraschalluntersuchungen zum Erhärtungsverlauf des erfindungsgemäßen Beispiels 1 in Relation zu Vgl. 1 und Vgl. 2.
Figur 2 zeigt die Ergebnisse von Ultraschalluntersuchungen zum Erhärtungsverlauf des erfindungsgemäßen Beispiels in Relation zu Vgl. 3 und Vgl. 4.
Figur 3 zeigt die Ergebnisse von Ultraschalluntersuchungen zum Erhärtungsverlauf des erfindungsgemäßen Beispiels 1, Beispiels 2 und Beispiels 3.

### Detaillierte Beschreibung der Erfindung

Die vorliegende Erfindung ist gemäß einem bestimmten Aspekt auf ein mineralisches Bindemittelsystem bzw. eine mineralische Kombination von verschiedenen Bindemitteln gerichtet, umfassend
i) ein mineralisches Bindemittel B1 von Calciumaluminaten, welches ein Verhältnis C/A von Calciumoxid C zu Aluminiumoxid A von 0,7 bis 1,1, bevorzugt von 0,8 bis 1,05, hat;
ii) ein mineralisches Bindemittel B2 von Calciumaluminaten, welches ein Verhältnis C/A von Calciumoxid C zu Aluminiumoxid A von 1,2 bis 2,7, bevorzugt von 1,4 bis 2,0, hat; und
iii) mindestens einen Sulfatträger.

Das Verhältnis C/A stellt hierbei das Molverhältnis innerhalb des jeweiligen Bindemittels zwischen Calciumoxid C und Aluminiumoxid A dar.

Gemäß bestimmten Ausführungsformen macht im mineralischen Bindemittel B2 die Summe des Gewichts der nutzbaren Phasen (C + A) mindestens 30% des Gesamtgewichts des mineralischen Bindemittels B2 aus.

Das erfindungsgemäße mineralische Bindemittelsystem besteht somit beispielsweise aus einer Kombination eines konventionellen und eines neuartigen Tonerdeschmelzzements (TEZ) und einem Sulfatträger. Als mineralisches Bindemittel ist ein Bindemittel zu verstehen, welches zumindest eine mineralische Komponente umfasst. Ein Tonerdeschmelzzement ist hierbei ein aus Bauxit und Kalkstein durch Sintern und/oder Schmelzen, beispielsweise bei 1500 - 1600°C hergestelltes Bindemittel. Die Zusammensetzung, Anforderungen und Konformitätskriterien von Tonerdeschmelzzementen/Tonerdezementen können hierbei beispielsweise der DIN EN 14647:2005 entnommen werden.

Gemäß bestimmten Ausführungsformen umfasst der Sulfatträger mindestens eine Gipsmodifikation, bevorzugt Calciumsulfat-Dihydrat, Calciumsulfat-α-Halbhydrat, Calciumsulfat-β-Halbhydrat und/oder Anhydrit.

Gemäß bestimmten Ausführungsformen umfasst das mineralische Bindemittel B1 Calciumoxid CaO in einer Menge von 30 bis 42 Gew.%, bevorzugt 33 bis 40 Gew.%, besonders bevorzugt 35 bis 39 Gew.%, bezogen auf das mineralische Bindemittel B1, welches 100 Gew.% umfasst. In dem mineralischen Bindemittel B1 ist zudem bevorzugt ein Anteil an Eisenoxid Fe₂O₃ von 10 bis 25 Gew.%, bevorzugt 12 bis 20 Gew.%, besonders bevorzugt 14 bis 18 Gew.% enthalten, bezogen auf das mineralische Bindemittel B1, welcher auf die Farbe und die Dichte des mineralischen Bindemittels B1 sowie des mineralischen Bindemittelsystems einen Einfluss hat. Daneben kann beispielsweise SiO₂ in einer Menge von 1 bis 10 Gew.%, bevorzugt 2 bis 7 Gew.%, besonders bevorzugt 3 bis 6 Gew.% bezogen auf das mineralische Bindemittel B1, enthalten sein. Gemäß bestimmten Ausführungsformen enthält das Bindemittel B1 Al₂O₃ in einer Menge von 35 bis 45 Gew.%, bevorzugt 37 bis 43 Gew.%, besonders bevorzugt 38 bis 42 Gew.%, bezogen auf das mineralische Bindemittel B1. Bevorzugt ist die Hauptklinkerphase des Bindemittels B1 CA (CaO·Al₂O₃).

Gemäß bestimmten Ausführungsformen umfasst das mineralische Bindemittel B2 Calciumoxid in einer Menge von 45 bis 65 Gew.%, bevorzugt 46 bis 55 Gew.%, besonders bevorzugt 47 bis 52 Gew.%, bezogen auf das mineralische Bindemittel B2, welches 100 Gew.% umfasst. In dem mineralischen Bindemittel B2 ist zudem bevorzugt ein Anteil an Eisenoxid Fe₂O₃ von 4 bis 10 Gew.%, bevorzugt 5 bis 9,5 Gew.%, besonders bevorzugt 5 bis 9 Gew.% enthalten, bezogen auf das mineralische Bindemittel B2, welcher auf die Farbe und die Dichte des mineralischen Bindemittels B2 sowie des mineralischen Bindemittelsystems einen Einfluss hat. Daneben kann beispielsweise SiO₂ in einer Menge von 1 bis 10 Gew.%, bevorzugt 2 bis 7 Gew.%, besonders bevorzugt 3 bis 6,5 Gew.% bezogen auf das mineralische Bindemittel B2, enthalten sein. Gemäß bestimmten Ausführungsformen enthält das Bindemittel B2 Al₃O₃ in einer Menge von 30 bis 40 Gew.%, bevorzugt 33 bis 38 Gew.%, besonders bevorzugt 33,5 - 37,5 Gew.%, bezogen auf das mineralische Bindemittel B1. Bevorzugt ist die Hauptklinkerphase des Bindemittels B2 C₁₂A₇. Gemäß bestimmten Ausführungsformen sind die Bindemittel B1 und B2 Ettringitbildende Bindemittel.

Beispielhafte Bindemittel B1 und B2 sind in Tabelle 1 als TEZ 1 und TEZ 2 angegeben, sowie als Vergleich von Portlandzement, wobei die Angaben in Gew.% angegeben sind.

Die in Tabelle 1 dargestellten, auch in den Beispielen und Vergleichsbeispielen eingesetzten Tonerdeschmelzzemente und der in den Vergleichsbeispielen eingesetzte Portlandzement (OPC) unterscheiden sich in ihrer chemisch-/mineralogischen Zusammensetzung. Die Zusammensetzung der Tonerdeschmelzzemente ist in **Tabelle 1** gegenübergestellt. Der TEZ 2 weist gegenüber den TEZ 1 einen erhöhten CaO-Anteil bei gleichzeitig verringertem Al₂O₃-Gehalt auf. Der Portlandzement (OPC) weist, abgesehen von unterschiedlichen Gehalten an Al₂O₃, CaO, SiO₂ und Fe₂O₃ noch SO₃ als essentielle Komponente auf. In Tabelle 1 ergänzen sich die Gewichtsangaben zu 100 Gew.%, wobei noch maximal 5 Gew.% weitere Bestandteile in den Tonerdeschmelzzementen TEZ 1 und TEZ 2 und dem Portlandzement (OPC) vorhanden sein können.

**Tabelle 1: Chemisch-/mineralogische Zusammensetzung der eingesetzten Tonerdeschmelzzemente (TEZ) und im Vergleich von Portlandzement**

| | | **TEZ 1** | **TEZ 2** | **OPC** |
|---|---|---|---|---|
| Chem. Zusammensetzung | Al₂O₃ | 38-41 | **3355 - 37,5** | **3,5 - 6,5** |
| | CaO | 35,3-37,9 | **47,5 - 50,5** | **60 - 68** |
| | SiO₂ | 3,5-5 | 3,6 - 6 | **18 - 23** |
| | Fe₂O₃ | 14,5-17,5 | 6,5 - 9 | **1,0 - 4,5** |
| | SO₃ | | | **2,5 - 4,5** |
| Mineralische Zusammensetzung | Hauptklinkerphase | CA | C₁₂A₇ | C₃S, C₂S |
| | Aktives-C/A | 1 | **1,77** | |

Bei TEZ 1 handelt es sich um einen "konventionellen" Tonerdeschmelzzement mit einem Al₂O₃-Anteil von ca. 40 %. Solche Tonerdeschmelzzemente sind von verschiedenen Herstellern verfügbar. Die Hauptklinkerphase bei solchen Zementen ist CA (CaO-Al₂O₃).

Zur Ausbildung des Haupt-Hydratationsprodukts Ettringit nach folgender Reaktion sind neben gelösten Al³⁺-Ionen auch Ca²⁺- und SO₄²⁻- Ionen erforderlich:

6Ca²⁺ + 2Al(OH)₄⁻+ 3SO₄²⁻ + 4OH⁻ + 26H₂O → 3CaOAl₂O₃·3CaSO₄·32H₂O

In konventionellen TEZ basierten Bindemittelsystemen werden die für die Ettringitbildung benötigen SO₄²⁻ - sowie Ca²⁺- Ionen durch die Formulierung mit Sulfatträgern (Dihydrat, Halbhydrat, Anhydrit) und/oder Portlandzement (OPC) zur Verfügung gestellt. Dabei handelt es sich üblicherweise um die nach dem Stand der Technik bekannten, ternären Bindemittelsysteme. Über das Verhältnis der Bindemittel zueinander lassen sich die Eigenschaften von Mörtelformulierungen (Verarbeitungseigenschaften, Materialeigenschaften) über einen weiten Bereich steuern.

Beim TEZ 2 handelt es sich um einen neuartigen Tonerdeschmelzzement mit einem erhöhten Anteil an CaO. Dies zeigt sich vor allem im Verhältnis C/A (CaO/Al₂O₃). Der TEZ 2 weist gegenüber den TEZ 1 einen erhöhten CaO-Anteil auf. Gleichzeitig ist der Al₂O₃-Gehalt im Vergleich zum TEZ 1 verringert. Aus diesem Grund benötigt dieses Bindemittel für die Ettringitbildung nur eine zusätzliche Sulfatquelle (Dihydrat, Halbhydrat, Anhydrit). Die notwendige Konzentration an gelöstem und schnell verfügbarem Ca²⁺ wird, im Gegensatz zur Ettringitbildung mit dem TEZ 1, durch TEZ2 bereitgestellt.

Gemäß bevorzugten Ausführungsformen ist das mineralische Bindemittelsystem bzw. die mineralische Bindemittelkombination frei von Portlandzement.

Gemäß bestimmten Ausführungsformen umfasst das mineralische Bindemittelsystem 40 bis 80 Gew.%, bevorzugt 40 bis 75 Gew.% und weiter bevorzugt 40 bis 70 Gew.%, des mineralischen Bindemittels B1 und/oder 10 bis 40 Gew.%, bevorzugt 20 bis 40 Gew.%, des mineralischen Bindemittels B2 und/oder 10 bis 20 Gew.% des Sulfatträgers, bezogen auf das Gesamtgewicht des mineralischen Bindemittelsystems, wobei das Gesamtgewicht von mineralischem Bindemittel B1 und mineralischem Bindemittel B2 und Sulfatträger nicht mehr als 100 Gew.% ausmacht.

Ein Herstellungsverfahren zur Herstellung des erfindungsgemäßen mineralischen Bindemittelsystems kann beispielsweise einen Schritt des Bereitstellens des mineralischen Bindemittels B1 von Calciumaluminaten, welches ein Verhältnis C/A von Calciumoxid C zu Aluminiumoxid A von 0,7 bis 1,1, bevorzugt von 0,8 bis 1,05, hat, des mineralischen Bindemittel B2 von Calciumaluminaten, welches ein Verhältnis C/A von Calciumoxid C zu Aluminiumoxid A von 1,2 bis 2,7, bevorzugt von 1,4 bis 2,0, hat, und des mindestens einen Sulfatträgers, ggf. einen Schritt des Einwiegens der einzelnen Komponenten und dann einen Schritt des Mischens der Komponenten umfassen.

Weiterhin betrifft die vorliegende Erfindung gemäß einem weiteren Aspekt einen Trockenmörtel, umfassend mindestens ein erfindungsgemäßes mineralisches Bindemittelsystem, Polymere, und gegebenenfalls Füllstoffe und/oder Rheologieadditive. Füllstoffe und/oder Rheologieadditive können mit einem Anteil von bis zu 60 Gew.%, bevorzugt bis zu 55 Gew.%, weiter bevorzugt bis zu 50 Gew.%, besonders bevorzugt bis zu 45 Gew.% bezogen auf 100 Gew.% des Trockenmörtels, enthalten sein.

Gemäß bestimmten Ausführungsformen hat der erfindungsgemäße Trockenmörtel einen Polymeranteil am Trockenmörtel von mindestens 20 Gew.%, bevorzugt von mindestens 25 Gew.%, weiter bevorzugt von mindestens 30 Gew.%, besonders bevorzugt von mindestens 35 Gew.%, bezogen auf den Trockenmörtel. Der Polymeranteil kann gemäß bestimmten Ausführungsformen bis zu 50 Gew.%, bevorzugt bis zu 45 Gew.%, weiter bevorzugt bis zu 40 Gew.%, bezogen auf den Trockenmörtel, an Polymeren umfassen. Als Polymeranteil können hierbei beispielsweise Dispersionspulver und/oder Verdicker und/oder Verarbeitungshilfsmittel in Frage kommen, welche üblicherweise verwendet werden. Bevorzugt werden Polymere als Dispersionspulver und/oder Verdicker und/oder Verarbeitungshilfsmittel verwendet.

Gemäß bestimmten Ausführungsformen können in dem erfindungsgemäßen Trockenmörtel bis zu 50 Gew.%, bevorzugt bis zu 45 Gew.%, weiter bevorzugt bis zu 40 Gew.%, zudem bevorzugt bis zu 35 Gew.%, bezogen auf das Trockenmörtelsystem, mindestens eines redispergierbaren Polymerdispersionspulvers als Polymer enthalten sein. Gemäß bestimmten Ausführungsformen kann das redispergierbare Polymerdispersionspulver ein Copolymer auf Basis von Acrylsäureester und Styrol und/oder ein Polymer basierend auf einer Vinylverbindung und Ethylen und/oder Styrol-Butadien-Kautschuk (SBR) umfassen.

Weiterhin kann der erfindungsgemäße Trockenmörtel Polymerfasern basierend auf Polyethylen und/oder Polypropylen umfassen.

Als organisches Bindemittel (Anteil beispielsweise bis ca. 40 Gew.-%) im erfindungsgemäßen Trockenmörtel kann somit beispielsweise ein redispergierbares Dispersionspulver auf Basis eines Copolymeren eines Acrylsäureesters und Styrol enthalten sein. Als alternative Dispersionspulver können auch Polymere auf Basis von Vinyl-Verbindungen (z.B. Vinylacetat) und Ethylen eingesetzt werden. Darüber hinaus kann der erfindungsgemäße Trockenmörtel für den speziellen Einsatz als 1-K Verbundabdichtung beispielsweise optional Polymerfasern sowie weitere rheologisch aktive Formulierungsbestandteile (Verdicker, Methylcellulosen) enthalten.

Als Rheologieadditive können beispielsweise Viskositätsregler, Retentionsmittel wie Polysaccharide, also makromolekulare Zucker, deren Grundmoleküle mit glycosidischen Bindungen verknüpft sind, wie beispielsweise Cellulose, verzweige Stärke oder sphärokolloides Glycogen, oder deren Derivate, wie Methylcellulosen, Hydroxymethylcellulosen, Hydroxypropylmethylcellulosen, Hydroxyethylether der Methylcellulose, sowie bestimmte Xanthane verwendet werden, wobei als Retentionsmittel beispielsweise speziell Celluloseether wie Methylcellulosehydroxyethylcellulose oder Hydroxypropylcellulose verwendet werden können (s. H. Kittel, Lehrbuch der Lacke und Beschichtungen, Band 7, Produkte für das Bauwesen, Beschichtungen, Bauklebstoffe, Dichtstoffe, S. 108 - 110, S. Hirzel Verlag Stuttgart, 2. Auflage, 2005), und es können auch sonstige übliche Verdicker umfasst sein.

Weiterhin kann der erfindungsgemäße Trockenmörtel auch weitere Additive wie Kalkhydrat in einer Menge von bis zu 2 Gew.%, bezogen auf den Trockenmörtel, enthalten, wobei Kalkhydrat beispielsweise die Verfilmung des Dispersionspulvers unterstützen kann. Zudem kann es die Verdicker aktivieren und somit die rheologischen Eigenschaften des Mörtels beeinflussen.

Als Additive können daneben auch beispielsweise Verzögerer, Beschleuniger wie Natriumphosphat, Kaliumphosphat, Natriumphosphonat, Kaliurnphosphonat, Ammoniumphosphat, Ammoniumphosphonat, wasserlösliche Silikofluoride, Borate, weitere Natriumsalze, Zucker wie Saccharose, Mannose und Glucose, Glukonsäuren und desen Natriumsalz, Glukonsäure-δ-lacton, Fruchtsäuren wie Citronensäure, Weinsäure und Äpfelsäure sowie deren Alkalisalze, Phosphonsäuren, Ligninsulfonat in unvergorener Form, EDTA, ZnO, PbO und ähnliche, wie sie beispielsweise aus H. Kittel, Lehrbuch der Lacke und Beschichtungen, Band 7, Produkte für das Bauwesen, Beschichtungen, Bauklebstoffe, Dichtstoffe, S. 100 - 101, S. Hirzel Verlag Stuttgart, 2. Auflage, 2005, bekannt sind, verwendet werden.

Gemäß bevorzugten Ausführungsformen ist der erfindungsgemäße Trockenmörtel frei von Portlandzement.

Der erfindungsgemäße Trockenmörtel kann beispielsweise durch Mischen des erfindungsgemäßen mineralischen Bindemittelsystems mit Polymeren und gegebenenfalls Füllstoffen und/oder Rheologieadditiven erfolgen, beispielsweise entsprechend den oben angegebenen Anteilen.

Gemäß einem weiteren Aspekt betrifft die vorliegende Erfindung zudem einen angemischten Trockenmörtel, umfassend den erfindungsgemäßen Trockenmörtel, Wasser und gegebenenfalls Sand. Als angemischter Trockenmörtel ist hierbei ein Trockenmörtel zu verstehen, welcher mit Wasser und gegebenenfalls Sand angemischt bzw. verarbeitet wird, wobei sich insbesondere eine verarbeitbare Konsistenz ergibt, in der dann der angemischte Trockenmörtel auf zu beschichtende Flächen, etc. aufgetragen werden kann. Zur Herstellung eines solchen angemischten Trockenmörtels kann der erfindungsgemäße Trockenmörtel auf geeignete Weise mit dem Wasser und gegebenenfalls Sand gemischt werden, beispielsweise unter Verwendung einer geeigneten Mischervorrichtung.

In einem weiteren Aspekt betrifft die vorliegende Erfindung die Verwendung des erfindungsgemäßen Trockenmörtels als, bevorzugt einkomponentige(r), Fliesenklebemörtel, Spachtelmasse, Dichtschlämme, Fugenmörtel, Estrichbindemittel (verschiedene Zemente + Additive ohne Sand), Estrichmörtel (Estrichbindemittel + Sand), Reparaturklebstoff und/oder Verbundabdichtung. Die Herstellung der entsprechenden Fliesenklebemörtel, Spachtelmassen, Dichtschlämme, Fugenmörtel, Estrichbindemittel, Estrichmörtel, Reparaturklebstoffe und/oder Verbundabdichtungen kann hierbei gemäß bekannten Verfahren und durch geeignete Auswahl der Komponenten und/oder Mischverhältnisse erfolgen, solange der erfindungsgemäße Trockenmörtel umfasst ist.

Gemäß bestimmten Ausführungsformen ist die Spachtelmasse eine selbstnivellierende bzw. selbstverlaufende und standfeste Spachtelmasse.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

### Beispiele

Eine Mörtelformulierung für eine zementäre 1-K Verbundabdichtung mit hohem Polymeranteil mit einem erfindungsgemäßen Bindemittelsystem wird im Folgenden mit 4 Mörtelformulierungen aus dem Stand der Technik verglichen (Vergleichsbeispiele Vgl.1 bis 4).

Die Zusammensetzungen werden im Detail nachstehend erörtert. Die Zusammensetzungen von TEZ 1, TEZ 2 und OPC können hierbei der Tabelle 1 entnommen werden.

### Beispiel:

zementäre 1-K Mörtelformulierung mit einem Polymeranteil > 30 Gew.-% mit erfindungsgemäßem Bindemittelsystem auf Basis zweier TEZ und Sulfatträger.

### Vgl. 1:

zementäre 1-K Mörtelformulierung mit einem Polymeranteil > 30 Gew.-% mit ternärem Bindemittelsystem (OPC dominiert) auf Basis OPC, TEZ und Sulfatträger in Anlehnung an die Richtrezeptur der BASF.
Richtrezeptur der BASF (Polymer/Zementverhältnis 1,0; Frischrohdichte 1310 kg/dm³) für Vgl. 1,. angegeben in Gewichtsteilen Trockenkomponente
260,0 Acronal^{®} P5033
220,0 CEM I 52,5 N (Mielke) (Zement)
30 Istra 40
491 Quarzsand F 36
15 Calciumsulfat
1 Lithiumcarbonat
0,9 Citronensäure
0,6 Weinsäure
5 Calciumhydroxid
4 Vinapor® DF 9010 F (Entschäumer)
2,8 Rheovis® HS 1980 F (Rheologiemodifikationsmittel)
260 Wasser

Acronal® P5033 ist ein redispergierbares vernetzendes Polymerpulver, basierend auf einer wässrigen anionischen Copolymerdispersion aus Acrylsäureester und Styrol, welches frei von Plastifizierungsmitteln, Ammoniak und Alkylphenolethoxylaten ist.

### Vgl. 2:

zementäre 1-K Mörtelformulierung mit einem Polymeranteil von 30 Gew.-% mit reinem OPC-Bindemittelsystem.

### Vgl. 3:

zementäre 1-K Mörtelformulierung mit einem Polymeranteil > 30 Gew.-% mit einem binären Bindemittelsystem auf Basis eines Ettringitbildenden TEZ und Sulfatträger.

### Vgl. 4:

zementäre 1-K Mörtelformulierung mit einem Polymeranteil > 30 Gew.-% mit einem ternären Bindemittelsystem (TEZ dominiert) auf Basis eines konventionellen TEZ, OPC und Sulfatträger.

In der folgenden Tabelle 2 sind die Zusammensetzung der Mörtelformulierungen gemäß den Beispielen 1 bis 3 und den Vergleichsbeispielen 1 bis 4 zusammengefasst, wobei die Zahlenwerte in Gew.% angegeben sind.

Der gesamte Polymeranteil beinhaltet hierbei alle in der Trockenmörtelformulierung enthaltenen polymeren Bestandteile. Dazu zählen überwiegend redispergierbare Dispersionspulver. Dabei kann es sich um Copolymere auf Basis von Acrylsäureestern und Styrol oder alternativ um Polymere auf Basis von Vinylverbindungen und Ethylen handeln. Darüber hinaus können Polymerfasern (PE, PP) enthalten sein. Als rheologisch aktive Formulierungsbestandteile können unter anderem Celluloseether, Stärkeether oder Verdicker enthalten sein.

**Tabelle 2: Mörtelformulierungen / Bindemittelzusammensetzungen**

| | **Beispiel 1** | **Beispiel 2** | **Beispiel 3** | **Vgl. 1** | **Vgl. 2** | **Vgl. 3** | **Vgl. 4** |
|---|---|---|---|---|---|---|---|
| **Zusammensetzung des** Bindemittelsystems | Erfindungsgemäßes Bindemittelsystem | | | Ternäres BM-System (OPC dom.) | OPC-System | Binäres BM-System (TEZ) | Ternäres BM-System (TEZ dom.) |
| **Beschreibung vergleichbarer Systeme** | | | | in Anlehnung an Richtrezeptur BASF | | DE 60304041 | |

| **Bindemittelsystem** | | | | | | | |
|---|---|---|---|---|---|---|---|
| TEZ 1 (Zusammensetzung s. Tabelle 1)[Gew.%] | 12 | 15 | 12 | 10 | | | 12 |
| TEZ 2 (Zusammensetzung s. Tabelle 1)[Gew.%] | 6 | 4 | 6 | | | 14 | |
| Sulfatträger (Calciumsulfat-Halbhydrat /CaSO₄·0,5 H₂O)[Gew.%] | 3 | 2 | 3 | 3 | | 7 | 5 |
| OPC (Zusammensetzung s. Tabelle 1)[Gew.%] | | | | 16 | 21 | | 4 |

| **Polymer** | | | | | | | |
|---|---|---|---|---|---|---|---|
| Redispergierbares Dispersionspulver auf Basis eines Copolymeren von Styrol und Acrylsäureester [Gew.%] | 36 | 36 | 36 | 35 | 30 | 36 | 36 |

| **Sonst. Bestandteile** | | | | | | | |
|---|---|---|---|---|---|---|---|
| Füllstoff (Quarzzuschlag 0,1-0,3 mm) [Gew.%] | 40 | | | 34 | 48,9 | 40 | 40 |
| Verzögerer (Fruchtsäure) [Gew.%] | | | | 0,2 | 0.1 | | |
| Additive (z.B. Celluloseether) [Gew.%] | 3 | 3 | 2,8 | 1,8 | | 3 | 3 |

Ein Vergleich der beispielhaften zementären 1-K Mörtelformulierung des Beispiels 1 mit den kommerziell erhältlichen Vergleichsprodukten in Tabelle 3 zeigt die Vorteile des eingesetzten erfindungsgemäßen Bindemittelsystems.

Die Verarbeitungszeit wurde unter Verwendung des Ultraschallmessgeräts IP8 Messsystem der Firma Ultratest GmbH, Deutschland ermittelt. Die Verarbeitungszeit ergab sich hierbei wie in Tabelle 3 angegeben. Als Verarbeitungszeit ist hierbei der Zeitraum von in-Kontakt-Bringen des Trockenmörtels mit Wasser bis zu dem Zeitpunkt, an dem er nicht mehr sicher zu verarbeiten ist, d.h. bis dieser seine verarbeitbare Konsistenz durch die einsetzende Reaktion verliert, zu verstehen.

Die Begehbarkeit und die Zeitspanne bis zum zweiten Auftrag wurden handwerklich bestimmt. Die Begehbarkeit kann auf der Fläche durch vorsichtiges Betreten und einer Drehbewegung des Fußes ermittelt werden. Wird die Oberfläche nicht beschädigt, bzw. sind keine Abtragungen zu beobachten, ist die Begehbarkeit erreicht. Für die genannten Beispiele wird das Produkt in einer Schichtstärke von 1 mm aufgetragen.

Die Bestimmung der Zeitspanne bis zum Auftragen einer zweiten Schicht erfolgt ebenfalls handwerklich. Ab diesem Zeitpunkt wird die erste Schicht durch weitere Applikation des Mörtels mittels einer Kelle nicht mehr verletzt.

**Tabelle 3: Verarbeitungszeit und Zeitspanne bis zur Begehbarkeit und Überarbeitbarkeit für Beispiel 1 und die Vergleichsformulierungen (Vgl. 1 bis Vgl. 4).**

| | **Beispiel 1** | **Vgl. 1** | **vgl. 2** | **Vgl. 3** | **Vgl. 4** |
|---|---|---|---|---|---|
| **Verarbeitungszeit** | | | | | |
| 10°C / 84% rF | 1,5 h | 2,5 h | 6 h | - | - |
| 23°C / 50% rF | 50 min | 5 min | 4,5 h | 3 h | 5 h |

| **Begehbarkeit (Schichtdicke 1 mm)** | | | | | |
|---|---|---|---|---|---|
| 10°C / 84% rF | 5 h | 8h | 10 h | - | - |
| 23°C / 509% rF | 2 h | 3h | 3,5 h | 3,5 h | 4,5 h |

| **Auftrag 2. Schicht** | | | | | |
|---|---|---|---|---|---|
| 10°C / 84% rF | 5,5 h | 10 h | 12 h | - | - |
| 23°C / 50% rF | 2,5 h | 4h | 4,5 h | 4 h | > 24 h |

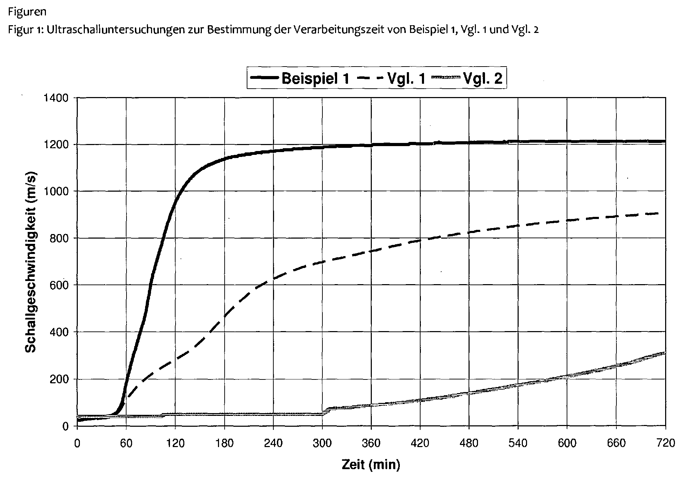

Gegenüber dem reinen OPC-System (Vgl. 2) zeigt die beispielgemäße Formulierung eine praxisgerechte Verarbeitungszeit von ca. 50 Minuten sowie eine gute Erhärtungsreaktion (ca. 2 h). So wird die Begehbarkeit früher erreicht und eine zweite Schicht kann ca. 2 Stunden früher aufgebracht werden. Wie mittels den oben angegebenen Ultraschalluntersuchungen des Erhärtungsverlaufs in Figur 1 gezeigt, ist bei Vgl. 2 sehr lange keine Reaktion, entsprechend einer gleich bleibenden Schallgeschwindigkeit, zu beobachten.

Das OPC dominierte, ternäre Bindemittelsystem der Formulierung Vgl. 1 zeigt gegenüber dem reinen OPC-System (Vgl. 2) eine Verkürzung der Zeiten, bis die Flächen begangen und überarbeitet werden können, wie in Tabelle 3 ersichtlich ist. Durch den Zusatz von Tonerdeschmelzzement und Sulfatträger wird die Hydratationsreaktion des OPC beschleunigt und damit der verzögernde Effekt des hohen Polymeranteils teilweise kompensiert. Dies ist auch in den Ultraschalluntersuchungen in Figur 1 ersichtlich. Hier ist ein kontinuierlicher Anstieg der Schallgeschwindigkeit zu beobachten. Gegenüber Vgl. 2 kann dies im System Vgl. 1 wohl auf die Ausbildung von Hydratationsprodukten zurückgeführt werden. Dennoch erreicht Vgl. 1 nicht die Eigenschaften der erfindungsgemäßen Formulierung des Beispiels. Sowohl die Zeit bis zur Begehbarkeit als auch bis zur Überarbeitung sind länger als beim neuartigen ternären Bindemittelsystem. Ebenso ist bei ungünstigen Umgebungsbedingungen eine Verlangsamung der Abbindereaktion des Systems zu beobachten, wie aus einem Vergleich der Zeit bis zur Überarbeitung RT (23°C) -> 10 °C: Erfindung: 220 % / Vgl. 1: 250 % hervorgeht. Nachteilig beim System von Vgl. 1 ist darüber hinaus die kurze Verarbeitungszeit von ca. 35 Minuten. Diese ist bei großflächigen Anwendungen (Anarbeiten, ineinander Arbeiten) und komplizierten baulichen Geometrien nicht praxisgerecht. Durch eine Verlängerung der Verarbeitungszeit (Verzögerung) werden die Durchhärtungsparameter (Begehbarkeit 2. Schicht) negativ beeinflusst.

In einem weiteren Vergleich wird die Formulierung des erfindungsgemäßen Beispiels mit nach dem Stand der Technik bekannten Bindemittelzusammensetzungen (Vgl. 3 und Vgl. 4) gegenübergestellt.

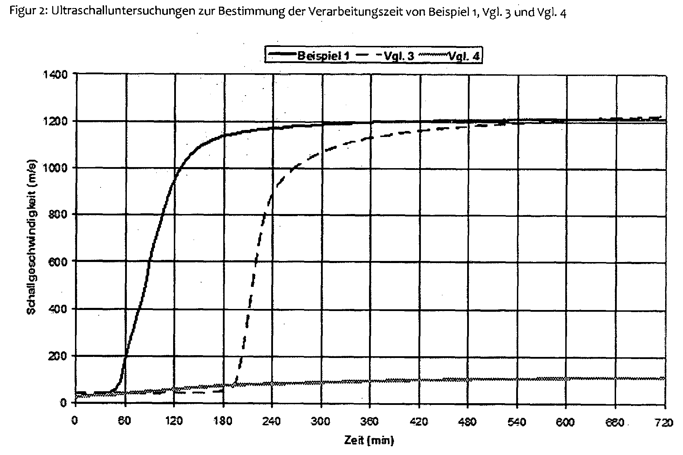

Das System von Vgl. 3 basiert auf dem neuartigen TEZ 2, welcher aufgrund seiner chemisch-/mineralogischen Zusammensetzung in Kombination mit einem Sulfatträger das Haupthydratationsprodukt Ettringit bilden kann (s.a. FR2839066 bzw. DE60304041). Solche Bindemittelsysteme zeichnen sich durch eine sehr schnelle Hydratationsreaktion insbesondere auf dichten Untergründen aus. In Systemen mit einem Polymergehalt < 20 Gew.-% (max. ca. 15 Gew.-%) liegt die Verarbeitungszeit aufgrund der hohen Reaktivität des TEZ beispielsweise bei ca. 10 Minuten, und in dünnen Schichten kann z.B. bereits nach 60 Minuten mit der Überarbeitung begonnen werden. Wird diese Bindemittelkombination in Systemen mit einem Polymergehalt > 20 Gew.-% eingesetzt, kommt es zu einer Verzögerung der Abbindereaktion des Systems, wie aus Figur 2 hervorgeht. Aus den Ultraschallergebnissen ergibt sich, dass insbesondere die Verarbeitungszeit deutlich verlängert wird. Überraschenderweise kann auch durch eine Variation des TEZ 2/Sulfatträgerverhältnisses die Verarbeitungszeit nicht praxisgerecht verkürzt werden.

Überraschenderweise zeigten auch nach dem Stand der Technik bekannte ternäre Bindemittelsysteme (TEZ dominiert; Vgl. 4) beim Einsatz in 1-K Mörtelformulierungen mit einem Polymeranteil > 20 Gew.-% eine signifikant reduzierte Reaktivität. In den Ultraschalluntersuchungen konnte ein Ergebnis vergleichbar zum reinen OPC-System festgestellt werden, wie in Figur 2 dargestellt ist. Obwohl Bindemittelkombinationen nach Vgl. 4 auch generell in Systemen mit erhöhtem Polymeranteil (> 5 Gew.-%; < 15 Gew.-%) eingesetzt werden, kommt die Hydratrationsreaktion durch den darüber hinausgehenden Polymeranteil nahezu vollständig zum Erliegen. Vgl. 4 zeigt selbst ohne zusätzliche Verzögerung nach 24 h keine ausreichende Erhärtung auf der Fläche. Mit den bekannten ternären Bindemittelsystemen kann die Reaktivität der erfindungsgemäßen Bindemittelkombination in Formulierungen mit einem Polymeranteil > 20 Ges.-% nicht erreicht werden.

Neben der Erhärtung stellt für die praktische Anwendung auch die Verarbeitungszeit ein wichtiges Kriterium dar. Die nach dem Stand der Technik vorgestellten Vergleichsbeispiele zeigen entweder zu lange (Vgl. 2) oder zu kurze Verarbeitungszeiten (Vgl. 1). Eine Verkürzung der Verarbeitungszeiten ist schwierig reproduzierbar umzusetzen. Eine Verlängerung, unter Zusatz von üblichen Verzögerern, die üblicherweise verwendet werden, führt zu einer weiter verzögerten Hydratationsreaktion. Auch bei den weiteren Vergleichsbeispielen (Vgl. 3 und Vgl. 4) war die Einstellung einer praxisgerechten Verarbeitungszeit nicht möglich.

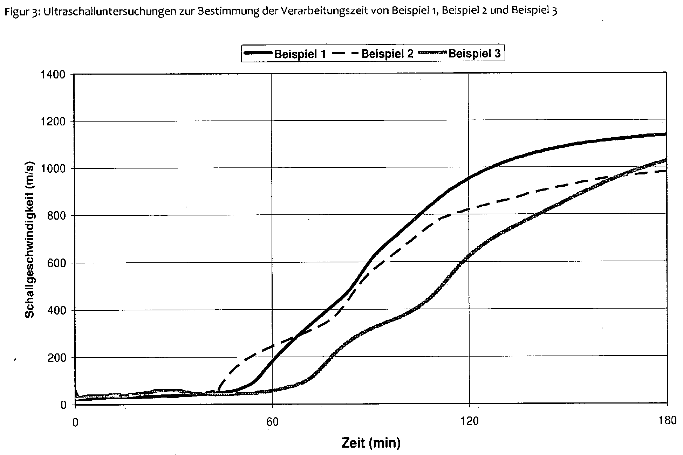

Mit dem neuartigen portlandzementfreien Bindemittelsystem sind Formulierungen möglich deren Verarbeitungszeiten sich von ca. 20 Minuten (Beispiel 2) bis 60 Minuten (Beispiel 3) einstellen lassen, ohne dass sich die weitere Abbindereaktion signifikant verändert, wie aus Figur 3 hervorgeht. Die Einstellung der Verarbeitungszeit kann entweder über eine Veränderung der Bindemittelverhältnisse oder durch Zusatz nach dem Stand der Technik bekannter Verzögerer (s. z.B. H. Kittel, Lehrbuch der Lacke und Beschichtungen, Band 7, Produkte für das Bauwesen, Beschichtungen, Bauklebstoffe, Dichtstoffe, S. 100 - 101, S. Hirzel Verlag Stuttgart, 2. Auflage, 2004) erfolgen.

Die neuartige Bindemittelkombination bestehend aus einer Abmischung der beiden Tonerdezemente (beispielsweise in einem Bereich von 4:1 bis 1:2 für das Gewichtsverhältnis TEZ1:TEZ2, beispielsweise 2:1) und dem Sulfatträger zeigt trotz des hohen Polymeranteils von > 30 Ges.-% überraschend eine sehr schnelle Durchhärtung bei einer praxisgerechten, ausreichenden Verarbeitungszeit.

Durch die Kombination der Tonerdeschmelzzemente lässt sich der verzögernde Effekt, verursacht durch den hohen Polymergehalt, deutlich reduzieren.

Durch die Kombination eines konventionellen TEZ, eines Sulfatträgers und eines Ettringitbildenden Bindemittels (TEZ 2) lässt sich v.a. für Systeme mit einem Kunststoffanteil > 20 Gew.-% eine schnelle Hydratationsreaktion erzielen, sowie die Verarbeitungszeiten ausreichend lang einstellen.

Die Abbindereaktion der nach dem Stand der Technik angeführten Bindemittelsysteme in den Vergleichsbeispielen ist aufgrund des hohen Polymeranteils deutlich verzögert. Besonders nachteilig ist dies für Produkte, die mit einem zweimaligen Auftrag verarbeitet werden müssen. Dies ist für die meisten zementären 1-K Mörtelsystemen mit hohem Polymeranteil gültig, insbesondere bei Abdichtungen im Verbund. Ein zweiter Auftrag kann erst nach Abtrocknung der ersten Schicht erfolgen, so dass diese nicht beschädigt und in ihrer Funktionalität beeinträchtigt wird.

In rein OPC-basierten Systemen kommt die Hydratationsreaktion durch den hohen Polymeranteil nahezu vollständig zum Erliegen. Durch die eingesetzten Polymere (Acrylat-Copolymere, Polyvinyalkohol als Schutzkolloid) kann es zu einer Komplexierung der für die Hydratation notwendigen Ionen (v.a. Ca²⁺) und zu einer Passivierung der reaktiven Zementkornoberflächen durch Adsorption kommen.

Die Begehbarkeit solcher Systeme wird verlängert und auch der Auftrag einer zweiten Schicht ist deutlich verzögert. Diese Effekte werden bei nachteiligen Umgebungsbedingungen (tiefe Temperatur, hohe relative Feuchte) noch verstärkt. Eine Beschleunigung der Hydratationsreaktion ist nur in begrenztem Umfang möglich. In reinen OPC-Systemen stellen Calcium-Silikat-Hydrat-Phasen (C-S-H-Phasen) die Haupthydratationsprodukte dar und nicht wie in ternären Systemen Ettringit. Dessen Bildung kann durch die Variation der Ionenkonzentrationen gezielt gesteuert werden. Bei der Erhärtung handelt es sich daher eher um einen physikalischen Trocknungsprozess als um eine zementäre Hydratationsreaktion.

Ternäre Bindemittelsysteme bestehend aus OPC (Hauptbindemittel), TEZ und einem Sulfatträger werden in ihrer Hydratation durch den hohen Polymeranteil ebenfalls stark beeinflusst. Gegenüber reinen OPC-Systemen werden die Zeiträume bis zur Begehbarkeit bzw. Applikation einer zweiten Schicht deutlich verkürzt. Allerdings zeigen solche Systeme auch eine sehr kurze Verarbeitungszeit, welche wiederum bei der Applikation an schwierigen Geometrien und großen Flächen nachteilig ist ("Ineinander-Arbeiten"). Auch zeigen diese ternären Bindemittelsysteme Nachteile bei ungünstigen Umgebungsbedingungen. Hier werden die Zeiten bis zur Begehbarkeit und auch zur Überarbeitung signifikant verlängert (+ 250 %).

## Patentansprüche

1. Mineralisches Bindemittelsystem, umfassend
i) ein mineralisches Bindemittel B1 von Calciumaluminaten, welches ein Verhältnis C/A von Calciumoxid C zu Aluminiumoxid A von 0,7 bis 1,1 hat;
ii) ein mineralisches Bindemittel B2 von Calciumaluminaten, welches ein Verhältnis C/A von Calciumoxid C zu Aluminiumoxid A von 1,2 bis 2,7 hat; und
iii) mindestens einen Sulfatträger.

2. Mineralisches Bindemittelsystem gemäß Anspruch 1, wobei das mineralische Bindemittel B1 Calciumoxid in einer Menge von 30 bis 42 Gew.%, bezogen auf das mineralische Bindemittel B1, umfasst.

3. Mineralisches Bindemittelsystem gemäß Anspruch 1 oder 2, wobei das mineralische Bindemittel B2 Calciumoxid in einer Menge von 45 bis Gew.65 %, bezogen auf das mineralische Bindemittel B2, umfasst.

4. Mineralisches Bindemittelsystem gemäß einem der Ansprüche 1 bis 3, wobei das mineralische Bindemittelsystem frei von Portlandzement ist.

5. Mineralisches Bindemittelsystem gemäß einem der vorgehenden Ansprüche, wobei der Sulfatträger mindestens eine Gipsmodifikation, bevorzugt Calciumsulfat-Dihydrat, Calciumsulfat-α-Halbhydrat, Calciumsulfat-β-Halbhydrat und/oder Anhydrit, umfasst.

6. Mineralisches Bindemittelsystem gemäß einem der vorgehenden Ansprüche, wobei das mineralische Bindemittelsystem 40 bis 80 Gew.% des mineralischen Bindemittels B1 und/oder 10 bis 40 Gew.% des mineralischen Bindemittels B2 und/oder 10 bis 20 Gew.% des Sulfatträgers umfasst, bezogen auf das Gesamtgewicht des mineralischen Bindemittelsystems, wobei das Gesamtgewicht von mineralischem Bindemittel B1 und mineralischem Bindemittel B2 und Sulfatträger nicht mehr als 100 Gew.% ausmacht.

7. Trockenmörtel, umfassend ein mineralisches Bindemittelsystem gemäß einem der Ansprüche 1 bis 6, Polymere, und gegebenenfalls Füllstoffe und/oder Rheologieadditive.

8. Trockenmörtel gemäß Anspruch 7 ,wobei der Polymeranteil am Trockenmörtel mindestens 20 Gew.%, bezogen auf den Trockenmörtel, ausmacht.

9. Trockenmörtel gemäß Anspruch 7 oder 8, wobei bis zu 50 Gew.%, bezogen auf das Trockenmörtelsystem, mindestens eines redispergierbaren Polymerdispersionspulvers als Polymer enthalten sind.

10. Trockenmörtel gemäß einem der Ansprüche 7 bis 9, wobei das redispergierbare Polymerdispersionspulver ein Copolymer auf Basis von Acrylsäureester und Styrol und/oder ein Polymer basierend auf einer Vinylverbindung und Ethylen umfasst.

11. Trockenmörtel gemäß einem der Ansprüche 7 bis 10, weiterhin umfassend Polymerfasern basierend auf Polyethylen und/oder Polypropylen.

12. Trockenmörtel gemäß einem der Ansprüche 7 bis 11, wobei die Rheologieadditive Celluloseether, Stärkeether und/oder Verdicker umfassen.

13. Trockenmörtel gemäß einem der Ansprüche 7 bis 12, wobei der Trockenmörtel frei von Portlandzement ist.

14. Angemischter Trockenmörtel, umfassend den Trockenmörtel gemäß einem der Ansprüche 7 bis 13, Wasser und gegebenenfalls Sand.

15. Verwendung des Trockenmörtels gemäß einem der Ansprüche 7 bis 13 als, bevorzugt einkomponentige(r), Fliesenklebemörtel, Spachtelmasse, Dichtschlämme, Fugenmörtel, Estrichbindemittel, Estrichmörtel, Reparaturklebstoff und/oder Verbundabdichtung.

## Claims

1. Mineral binder system comprising
i) a mineral binder B1 of calcium aluminates, having a ratio C/A of calcium oxide C to aluminium oxide A of 0.7 to 1.1;
ii) a mineral binder B2 of calcium aluminates, having a ratio C/A of calcium oxide C to aluminium oxide A of 1.2 to 2.7; and
iii) at least one sulphate carrier.

2. Mineral binder system according to Claim 1, the mineral binder B1 comprising calcium oxide in an amount of 30 to 42 wt%, based on the mineral binder B1.

3. Mineral binder system according to Claim 1 or 2, the mineral binder B2 comprising calcium oxide in an amount of 45 to 65 wt%, based on the mineral binder B2.

4. Mineral binder system according to any of Claims 1 to 3, the mineral binder system being free from Portland cement.

5. Mineral binder system according to any of the preceding claims, the sulphate carrier comprising at least one gypsum modification, preferably calcium sulphate dihydrate, calcium sulphate α-hemihydrate, calcium sulphate β-hemihydrate and/or anhydrite.

6. Mineral binder system according to any of the preceding claims, the mineral binder system comprising 40 to 80 wt% of the mineral binder B1 and/or 10 to 40 wt% of the mineral binder B2 and/or 10 to 20 wt% of the sulphate carrier, based on the total weight of the mineral binder system, the total weight of mineral binder B1 and mineral binder B2 and sulphate carrier accounting for not more than 100 wt%.

7. Dry mortar comprising a mineral binder system according to any of Claims 1 to 6, polymers, and optionally fillers and/or rheological additives.

8. Dry mortar according to Claim 7, the polymer fraction of the dry mortar accounting for at least 20 wt%, based on the dry mortar.

9. Dry mortar according to Claim 7 or 8, up to 50 wt%, based on the dry mortar system, of at least one redispersible polymer dispersion powder being present as polymer.

10. Dry mortar according to any of Claims 7 to 9, the redispersible polymer dispersion powder comprising a copolymer based on acrylic ester and styrene and/or a polymer based on a vinyl compound and ethylene.

11. Dry mortar according to any of Claims 7 to 10, further comprising polymer fibres based on polyethylene and/or polypropylene.

12. Dry mortar according to any of Claims 7 to 11, the rheological additives comprising cellulose ethers, starch ethers and/or thickeners.

13. Dry mortar according to any of Claims 7 to 12, the dry mortar being free from Portland cement.

14. Dry mortar prepared by mixing, comprising the dry mortar according to any of Claims 7 to 13, water, and optionally sand.

15. Use of the dry mortar according to any of Claims 7 to 13 as - preferably one-component - tile adhesive mortar, levelling compound, waterproofing slurry, grout mortar, screed binder, screed mortar, repair adhesive and/or damp proof membrane.

## Revendications

1. Système de liant minéral, comprenant :
i) un liant minéral B1 d'aluminates de calcium, qui a un rapport C/A entre l'oxyde de calcium C et l'oxyde d'aluminium A de 0,7 à 1,1 ;
ii) un liant minéral B2 d'aluminates de calcium, qui a un rapport C/A entre l'oxyde de calcium C et l'oxyde d'aluminium A de 1,2 à 2,7 ; et
iii) au moins un support sulfate.

2. Système de liant minéral selon la revendication 1, dans lequel le liant minéral B1 comprend de l'oxyde de calcium en une quantité de 30 à 42 % en poids, par rapport au liant minéral B1.

3. Système de liant minéral selon la revendication 1 ou 2, dans lequel le liant minéral B2 comprend de l'oxyde de calcium en une quantité de 45 à 65 % en poids, par rapport au liant minéral B2.

4. Système de liant minéral selon l'une quelconque des revendications 1 à 3, dans lequel le système de liant minéral est exempt de ciment Portland.

5. Système de liant minéral selon l'une quelconque des revendications précédentes, dans lequel le support sulfate comprend au moins une forme de plâtre, de préférence le sulfate de calcium dihydraté, le sulfate de calcium α semi-hydraté, le sulfate de calcium β semi-hydraté et/ou l'anhydrite.

6. Système de liant minéral selon l'une quelconque des revendications précédentes, dans lequel le système de liant minéral comprend 40 à 80 % en poids du liant minéral B1 et/ou 10 à 40 % en poids du liant minéral B2 et/ou 10 à 20 % en poids du support sulfate, par rapport au poids total du système de liant minéral, le poids total du liant minéral B1 et du liant minéral B2 et du support sulfate n'étant pas supérieur à 100 % en poids.

7. Mortier sec, comprenant un système de liant minéral selon l'une quelconque des revendications 1 à 6, et éventuellement des charges et/ou des additifs de rhéologie.

8. Mortier sec selon la revendication 7, dans lequel la proportion de polymère dans le mortier sec est d'au moins 20 % en poids, par rapport au mortier sec.

9. Mortier sec selon la revendication 7 ou 8, dans lequel jusqu'à 50 % en poids, par rapport au système de mortier sec, d'au moins une poudre de dispersion polymère redispersible est contenue en tant que polymère.

10. Mortier sec selon l'une quelconque des revendications 7 à 9, dans lequel la poudre de dispersion polymère redispersible comprend un copolymère à base d'ester de l'acide acrylique et de styrène et/ou un polymère à base d'un composé de vinyle et d'éthylène.

11. Mortier sec selon l'une quelconque des revendications 7 à 10, comprenant en outre des fibres polymères à base de polyéthylène et/ou de polypropylène.

12. Mortier sec selon l'une quelconque des revendications 7 à 11, dans lequel les additifs de rhéologie comprennent des éthers de cellulose, des éthers d'amidon et/ou des épaississants.

13. Mortier sec selon l'une quelconque des revendications 7 à 12, dans lequel le mortier sec est exempt de ciment Portland.

14. Mortier sec gâché, comprenant le mortier sec selon l'une quelconque des revendications 7 à 13, de l'eau et éventuellement du sable.

15. Utilisation du mortier sec selon l'une quelconque des revendications 7 à 13 en tant que mortier colle pour carreaux, enduit, mortier d'étanchéité, mortier de jointoiement, liant pour chape, mortier pour chape, colle de réparation et/ou système d'étanchéité composite, de préférence monocomposants.
